# EUROPÄISCHE PATENTANMELDUNG

(11) **EP 0 987 339 A1**
(43) Veröffentlichungstag der Anmeldung: **22.03.2000**
(21) Anmeldenummer: 99115952.6
(22) Anmeldetag: 13.08.1999
(51) Int. Cl.: C22C 21/02, C23C 4/06

(54) **Metallisierungsdraht für die Erzeugung von Oberflächen-Beschichtungen**

(30) Priorität: 11.09.1998 DE 19841619
(71) Anmelder: DaimlerChrysler AG, 70567 Stuttgart (DE)
(72) Erfinder: Haug, Tilmann, Dr., 89264 Weissenhorn (DE); Izquierdo, Patrick, 89077 Ulm (DE); Reichle, Wolfgang, 73252 Lenningen (DE)

(57) **Zusammenfassung**

Die vorliegende Erfindung betrifft einen Werkstoffdraht für die Erzeugung verschleißfester und tribologisch günstiger Oberflächen-Beschichtungen aus übereutektischen Al/Si-Legierungen durch thermisches Spritzen. Erfindungsgemäß ist vorgesehen, daß der Werkstoffdraht (40) ein Fülldraht ist, der eine Hülle (41) aus metallischem Aluminium und eine Füllung (42) aus einer oder mehreren weiteren Legierungskomponenten aufweist.

## Beschreibung

Die vorliegende Erfindung betrifft einen Werkstoffdraht für die Erzeugung verschleißfester und tribologisch günstige Oberflächen-Beschichtungen aus übereutektischen Al/Si-Legierungen durch thermisches spritzen.

Derartige Beschichtungen sind an sich bekannt. Sie finden insbesondere als Zylinderlaufflächen von Zylindergehäusen von Hubkolbenmaschinen Verwendung. Beschichtungen Al/Si-Legierungen sind z. B. aus der US 50 22 455 A bekannt. Dabei werden geschmolzenes Aluminium und Siliziumpartikel separat auf die zu beschichtende Oberfläche aufgesprüht. Andere Al/Si-Legierungen sind z. B. aus der DE 40 20 268 C1 und der US 47 11 823 sowie aus der US 47 37 206 und der US 49 69 428 und der DE 44 38 550 A1. Eine weitere Legierung ist aus der US 49 59 276 bekannt.

Derartige Beschichtungen können auf vielfältige Weise auf die Oberflächen von Substraten aufgebracht werden. Besonders geeignet ist das thermische spritzen, insbesondere das Drahtlichtbogenspritzen oder das Plasmaspritzen. Beim Plasmaspritzen wird in der Flamme aufgeschmolzenes pulverförmiges Ausgangsmaterial verwendet, beim Drahtlichtbogenspritzen ein metallisches Ausgangsmaterial in Form eines Werkstoffdrahtes. Das Drahtlichtbogenspritzen ist dabei besonders bevorzugt, weil es durch hohe Taktzeiten eine große Auftragsrate der Beschichtung erlaubt und hinsichtlich des Werkstoffs sowie hinsichtlich der Anlage kostengünstig ist.

Aus der DE 43 41 537 A1 ist ein Verbundwerkstoff-Draht für das Drahtlichtbogenspritzen sowie ein Verfahren zu seiner Herstellung offenbart. Der Draht weist einen festen Kern aus leitfähigen Metall und eine Ummantelung auf, in der feste Schmiermittelpartikel und verschleißfeste Partikel homogen in einem dem festen Kern entsprechenden leitfähigen Metall suspendiert sind. Ein solcher Verbundwerkstoff-Drahtist jedoch in seiner Herstellung relativ aufwendig und kostenträchtig und nicht für alle Anwendungen geeignet.

Aufgabe der vorliegenden Erfindung ist es daher, einen Werkstoffdraht der oben genannten Art bereitzustellen, der einfach und kostengünstig herstellbar ist und die Erzeugung von Oberflächenbeschichtungen aus übereutektischen Al/Si-Legierungen erlaubt.

Die Lösung, besteht darin, daß der Werkstoffdraht ein Fülldraht ist, der einen Mantel aus metallischem Aluminium und eine Füllung aus einem oder mehreren weiteren Legierungskomponenten aufweist.

Der Kern der Erfindung besteht somit darin, daß die Legierungskomponenten, d. h. die Ausgangsstoffe für die Herstellung der gewünschten Al/Si-Legierung zur Herstellung des Drahtes verwendet werden, wobei der hohle Aluminiummantel unverändert bleibt und die Füllung individuell zusammengestellt werden kann, je nach dem welche Zusammensetzung in der gewünschten Al/Si-Legierung benötigt wird. Die einzelnen Komponenten verbinden sich während des Aufschmelzens beim Drahtlichtbogenspritzen und während des Auftrags auf die Oberfläche zu der eigentlichen Legierung. Auf diese Weise wird ein einfach und kostengünstig herzustellender Werkstoffdraht bereitgestellt, der für die Herstellung beliebiger Al/Si-Legierungen Verwendung finden kann.

Vorteilhafte Weiterbildungen ergeben sich aus den Unteransprüchen. Eine besonders bevorzugte Ausführungsform des erfindungsgemäßen Werkstoffdrahts enthält in der Füllung Silizium sowie Nickel, Eisen, Magnesium, Kupfer, Kobalt, Chrom, Mangan, Zinn, Zink, Zirkon und/oder weitere Legierungskomponenten. Dabei ist in besonders vorteilhafter Weise die Silizium-Menge so bemessen, daß die resultierende Legierung ca. 17-40 Gew.-% Silizium enthält.

Eine weitere vorteilhafte Ausgestaltung besteht darin, daß die Füllung neben den weiteren Legierungskomponenten auch noch weitere Zusätze, z. B. Harzmetallpartikel, Keramikpartikel oder Trokkenschmierstoffe enthält.

Der erfindungsgemäße Werkstoffdraht wird bevorzugt zu einer Aluminium-Silizium-Legierung verarbeitet, die im wesentlichen kupferfrei ist, d. h. weniger als 1 Gew.-% Kupfer enthält.

Der erfindungsgemäße Werkstoffdraht eignet sich insbesondere zur Herstellung von Zylinderlaufflächen in Brennkraftmaschinen. Er ist besonders zur Herstellung von Beschichtungen geeignet, wie sie aus der unveröffentlichten deutschen Patentanmeldung 197 33 208.8-45, eingereicht am 01. August 1997, bekannt sind. Diese Beschichtungen bestehen im wesentlichen aus einer übereutektischen Aluminium-Silizium-Legierung bzw. einem Aluminium-Silizium-Verbundwerkstoff, die sich durch ein heterogenes Schichtgefüge aus Aluminium-Mischkristall, einem groben bis sehr feinem Netzwerk aus eutektischem Silizium, Silizium-Ausscheidungen bzw. - Partikeln, intermetallischen Phasen und extrem fein verteilten Oxiden auszeichnen. Diese Beschichtungen weisen charakteristische primäre Aluminium-Mischkristall-Dendrite auf, bei denen die Dendritenarme von eutektischem Silizium umhüllt sind. Die Schliffaufnahmen derartiger Beschichtungen zeigen ein charakteristisches schwammartiges Aussehen. Silizium-Primärausscheidungen und Siliziumpartikel liegen nur in einem kleinen Anteil vor und weisen einen kleinen Durchmesser auf. Bei der Oberflächenbearbeitung dieser Schichten werden die an der Oberfläche liegenden Dendritenarme angeschliffen, so daß beim nachfolgenden Freilegen das Aluminium weggeätzt wird und aluminiumfreie Silizium-Gerüste zurückbleiben, die die eigentliche Lauffläche bilden.

Der erfindungsgemäße Werkstoffdraht ist besonders für das Drahtlichtbogenspritzen, aber auch für das HochgeschwindigkeitsFlammspritzen (HVOF) geeignet.

Ein Ausführungsbeispiel der vorliegenden Erfindung wird im Folgenden anhand der beigefügten Zeichnungen näher beschrieben. Es zeigen:
- Figur 1: eine Vorrichtung zum thermischen Spritzen, in der der erfindungsgemäße Werkstoffdraht zum Einsatz kommen kann;
- Figur 2: eine schematische Darstellung eines erfindungsgemäßen Werkstoffdrahts;

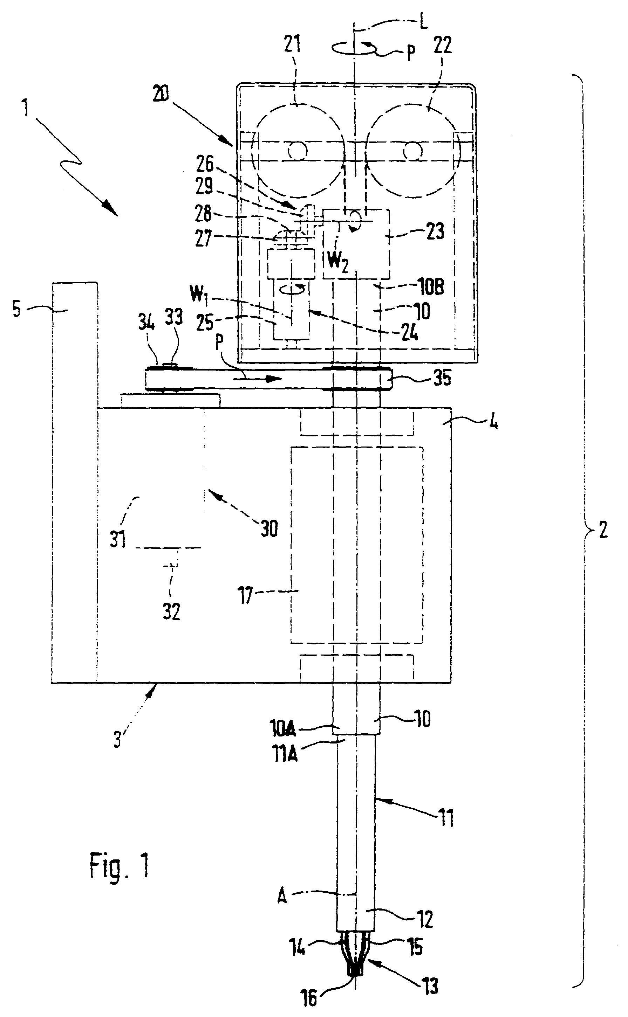

Der erfindungsgemäße Werkstoffdraht kann z. Bsp. in einer Vorrichtung 1 verwendet werden, wie sie in Figur 1 dargestellt ist. Die Vorrichtung 1 weist eine Drahtlichtbogen-Spritzeinrichtung 2 auf, die an einer Halterung 3 befestigt ist. Die Halterung 3 bestent aus einem Halteblock 4 und einem am Halteblock 4 vorgesehenen Befestigungsflansch 5. Der Befestigungsflansch 5 dient dazu, die erfindungsgemäße Vorrichtung beispielsweise mit einem Roboterarm oder einer sonstigen Halteeinrichtung zu koppeln.

Die Drahtlichtbogen-Spritzeinrichtung 2 weist einen Brennerschaft 10 auf, welcher in Form eines Hohlkörpers, hier einer Hohlwelle ausgebildet ist. An seinem einen Ende 10A weist der Brennerschaft 10 einen Innenbrenner 11 mit einem hohlen Brennerstab 12 und dem eigentlichen Brennerkopf 13 auf. Am Brennerkopf 13 befinden sich zwei Versorgungsdrähte 14, 15, zwischen denen ein Lichtbogen gezündet werden soll, sowie eine Druckluftdüse 16, die radial zur Länosachse A der Innenspritzeinrichtung 2 angeordnet ist.

Der Innenbrenner 11 ist an seinem dem Brennerkopf 13 gegenüberliegenden Ende 11 A mittels einer hier nicht dargestellten Kupplungseinrichtung in den Brennerschaft 10 austauschbar eingesteckt. Das bedeutet, das der Innenbrenner 11 durch andere Innenbrenner ausgetauscht werden kann, z. Bsp. mit größerem oder kleinerem Durchmesser, um Hohlkörper mit verschiedenen Innendurchmessern beschichten zu können. Mit der Kupplung können ggf. vorgesehene Versorgungseinrichtungen für die Drähte oder das Verteilergas aneinander angekoppelt werden.

Der Brennerschaft 10 ist in einer im Halteblock 4 vorgesehenen Lagerung 17 um seine Längsachse L drehbar gelagert. Der Antrieb des Brennerschafts 10 erfolgt durch eine Antriebseinrichtung 30, welche in den Halteblock 4 integriert ist. Diese Einrichtung 30 besteht im wesentlichen aus einem Motor 31, der eine Welle 32 antreibt. Die Welle 32 ragt mit ihrem oberen freien Ende aus dem Halteblock 4 heraus und trägt an ihrem oberen freien Ende 33 ein Rad 34, um welches ein Antriebsriemen 35 gelegt ist. Der Riemen 35 ist ferner oberhalb des Halteblocks 4 um den Brennerschaft 10 geschlungen und sorgt so für dessen Drehbewegung, z. Bsp. in Richtung der Pfeile P.

Die Lagerung 17 ist mit hier nicht dargestellten Schleifringen zur Energieerzeugung und -übertragung ausgestattet. Damit wird durch die Drehung des Brennerschaftes 10 die nötige Energie erzeugt, die zur Zündung des Lichtbogens zwischen den Drähten 14, 15 nötig ist. Die Lagerung 17 weist ferner ebenfalls nicht dargestellte Gasverteilerbohrungen auf. In diese Gasverteilerbohrungen münden Versorgungsleitungen für das Verteilergas, die innerhalb des Halteblocks 4 angeordnet sind. Das Verteilergas tritt, ebenso wie die Drähte 14, 15 durch den hohlen Brennerschaft 10 und den hohlen Brennerstab 12 des Innenbrenners 11 und gelangt so zum Brennerkopf 13, wo es durch die Verteilerdüse 16 austritt.

An dem vom Innenbrenner 11 entfernten Ende 10 B des Brennerschafts 10 ist eine Nachschubeinrichtung 20 befestigt. Die Nachschubeinrichtung 20 dreht sich mit dem Brennerschaft 10 in Richtung des Pfeiles P um die Längsachse L der Innenspritzeinrichtung 2. Die Nachschubeinrichtung 20 weist zwei Drahthaspeln 21, 22 auf, auf welche die Drähte 14, 15 aufgewickelt sind. Die sich von den Haspeln 21, 22 abwickelnden Drähte 14, 15 werden durch eine Drahtschubeinheit 23 in Richtung des Brennerkopfes 13 entsprechend ihrem Verbrauch nachgeführt. Im Anschluß an die Drahtschubeinheit 23 ist eine hier nicht dargestellte Drahtrichteinheit vorgesehen, die dafür sorgt, daß sich die Drähte 14, 15 während des Drahtvorschubs nicht überkreuzen. Die Nachschubeinrichtung 20 weist ferner einen Antrieb 24 für die Drahtschubeinheit 23 auf. Im Ausführungsbeispiel handelt es sich um einen Motor 25 und ein Übertragungsglied 26 aus miteinander kämmenden Zahnrädern 27, 29. Das Zahnrad 27 ist dem Motor 25 zugeordnet und auf einer Welle 28 befestigt, die, durch den Motor 25 angetrieben, um ihre Achse W₁ rotiert. Das Zahnrad 29 ist der Drahtschubeinheit 23 zugeordnet und im rechten Winkel zum Zahnrad 27 angeordnet und und dreht sich um seine Achse W₂. Die Drehrichtungen der Zahnräder 27, 29 sind durch Pfeile angedeutet.

Die Funktionsweise der Drahtlichtbogen-Spritzeinrichtung ist an sich bekannt. Zwischen den Enden der beiden Drähte 14, 15 wird ein Lichtbogen gezündet, der das Material der Drähte (Metall oder Metallegierung) schmilzt. Die aus der Düse austretende Druckluft bzw. das Verteilergas zerstäubt das geschmolzene Material in feine Tröpfchen, die sich auf der zu beschichtenden Oberfläche abscheiden.

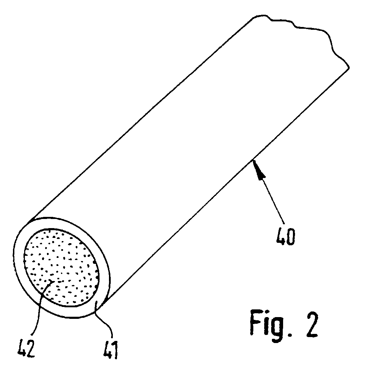

Mindestens einer der eingesetzten Drähte 14, 15 ist ein erfindungsgemäßer Werkstoffdraht 40, wie er in Figur 2 schematisch dargestellt ist. Der Werkstoffdraht 40 weist eine Hülle 41 aus metallischem Aluminium und eine Füllung 42 aus einem oder mehreren weiteren Legierungsbestandteilen auf. Bei diesen weiteren Legierungsbestandteilen kann es sich um Silizium, Nickel, Eisen, Magnesium, Kupfer, Kobalt, Chrom, Mangan, Zinn, Zink, Zirkon und/oder weitere Legierungskomponenten handeln. Die Mengenverhältnisse in der Füllung 42 entsprechen denen in der fertigen thermisch gespritzten Schicht. Im Ausführungsbeispiel wurde ein Werkstoffdraht 40 mit einer Hülle 41 aus Aluminium und einer Füllung aus 25 Teilen Silizium, 4 Teilen Nickel, 1,2 Teilen Eisen und 1,2 Teilen Magnesium gewählt. Die resultierende übereutektische Al/Si-Legierung war demnach Al Si25 4Ni 1,2Fe 1,2Mg.

Weitere in den Ausführungsbeispielen verwendete erfindungsgemäße Werkstoffdrähte haben die folgende Zusammensetzung:

### Werkstoffdraht A

Silizium: 23 bis 40 Teile, vorzugsweise etwa 25 Teile
Magnesium: 0,8 bis 2 Teile, vorzugsweise etwa 1,2 Teile
Zirkon: maximal 0,6 Teile
Eisen: maximal 0,25 Teile
Mangan, Nickel, Kupfer und Zink: maximal jeweils 0,01 Teile Rest Aluminium.

### Werkstoffdraht B

Silizium: 23 bis 40 Teile, vorzugsweise etwa 25 Teile
Nickel: 1 bis 5 Teile vorzugsweise etwa 4 Teile
Eisen: 1 bis 1,4 Teile, vorzugsweise etwa 1,2 Teile
Magnesium: 0,8 bis 2 Teile, vorzugsweise etwa 1,2 Teile
Zirkon: maximal 0,6 Teile
Mangan, Kupfer und Zink: maximal jeweils 0,01 Teile Rest Aluminium.
Es können ferner gleichermaßen Füllungen verwendet werden, bei denen es sich um ein agglomeriertes Verbundpulver aus feinen Silizium-Partikeln und feinen metallischen Partikeln mindestens einer Aluminium-Silizium-Legierung handelt, die miteinander anhand von anorganischen oder organischen Bindern gebunden sind. Der Anteil an Silizium-Partikeln beträgt 5 bis 95 Gew. -%, der Anteil an Legierungspartikeln beträgt 95 bis 50 Gew.-%. Die Silizium-Partikel haben eine mittlere Korngröße von 0,1 bis 10µm, vorzugsweise etwa 5µm. Die Legierungspartikel haben eine mittlere Korngröße von 0,1 bis 50µm, vorzugsweise etwa 5µm.

Die Legierungspartikel bestehen vorzugsweise aus einer Mischung aus untereutektischen Legierungspartikeln und übereutektischen Legierungspartikeln. Durch die Verwendung von übereutektischen Legierungspartikeln wird der Anteil an Aluminium-Mischkristall im Schichtgefüge der späteren Beschichtung beibehalten, während durch die Verwendung von untereutektischen Legierungspartikeln die Bildung des Aluminium-Mischkristalls unterdrückt wird. Im folgenden sind je zwei Beispiele für geeignete untereutektische bzw. übereutektische Legierungen genannt.

### Untereutektische Legierungen:

### Legierung 1

Silizium: 0 bis 11,8 Gew.-%, vorzugsweise etwa 9 Gew.-%
Eisen: maximal 0,25 Gew.-%
Magnesium: 0,8 bis 2,0 Gew.-%, vorzugsweise etwa 1,2 Gew.-%
Zirkon: maximal 0,6 Gew.-%
Mangan, Nickel, Kupfer und Zink: maximal jeweils 0,01 Gew.-% Rest Aluminium.

### Legierung 2

Silizium: 0 bis 11,8 Gew.-%, vorzugsweise etwa 9 Gew.-%
Nickel: 1,0 bis 5,0 Gew.-%, vorzugsweise etwa 4 Gew.-%
Eisen: 1,0 bis 1,4 Gew.-%, vorzugsweise etwa 1,2 Gew.-%
Magnesium: 0,8 bis 2,0 Gew.-%, vorzugsweise etwa 1,2 Gew.-%
Zirkon: maximal 0,6 Gew.-%
Mangan, Kupfer und Zink: maximal jeweils 0,01 Gew.-% Rest Aluminium.

### Übereutektische Legierungen:

### Legierung 3:

Silizium: 11,8 bis 40,0 Gew.-%, vorzugsweise etwa 17 Gew.-%
Eisen: maximal 0,25 Gew.-%
Magnesium: 0,8 bis 2,0 Gew.-%, vorzugsweise etwa 1,2 Gew.-%
Zirkon: maximal 0,6 Gew.-%
Mangan, Kupfer, Nickel und Zink: maximal jeweils 0,01 Gew.-% Rest Aluminium.

### Legierung 4:

Silizium: 11,8 bis 40,0 Gew.-%, vorzugsweise etwa 17 Gew.-%
Nickel: 1,0 bis 5,0 Gew.-%, vorzugsweise etwa 4 Gew.-%
Eisen: 1,0 bis 1,4 Gew.-%, vorzugsweise etwa 1,2 Gew.-%
Magnesium: 0,8 bis 2,0 Gew.-%, vorzugsweise etwa 1,2 Gew.-%
Zirkon: maximal 0,6 Gew.-%
Mangan, Kupfer und Zink: maximal jeweils 0,01 Gew.-% Rest Aluminium.

Der erfindungsgemäße Werkstoffdraht eignet sich besonders gut zur Herstellung von Beschichtungen auf Zylinderlaufflächen.

## Patentansprüche

1. Werkstoffdraht für die Erzeugung verschleißfester und tribologisch günstiger Oberflächen-Beschichtungen aus übereutektischen Al/Si-Legierungen durch thermisches Spritzen,
**dadurch gekennzeichnet**,
daß der Werkstoffdraht (40) ein Fülldraht ist, der eine Hülle (41) aus metallischem Aluminium und eine Füllung (42) aus einer oder mehreren weiteren Legierungskomponenten aufweist.

2. Werkstoffdraht nach Anspruch 1,
**dadurch gekennzeichnet,**
daß die Füllung (42) Silizium sowie Nickel, Eisen, Magnesium, Kupfer, Kobalt, Chrom, Mangan, Zinn, Zink, Zirkon und/oder weitere Legierungskomponenten aufweist.

3. Werkstoffdraht nach einem der vorhergehenden Ansprüche,
**dadurch gekennzeichnet,**
daß die Silizium-Menge so bemessen ist, daß die resultierende Legierung ca. 17-40 Gew.-% Silizium enthält.

4. Werkstoffdraht nach einem der vorhergehenden Ansprüche,
**dadurch gekennzeichnet,**
daß die Füllung (42) neben den Legierungskomponenten weitere Bestandteile, insbesondere Hartmetallpartikel und/oder Keramikpartikel und/oder Trockenschmierstoffe enthält.

5. Werkstoffdraht nach einem der vorhergehenden Ansprüche,
**dadurch gekennzeichnet,**
daß die Füllung (42) im wesentlichen kupferfrei ist, wobei der Kupferanteil jeweils kleiner als 1 Gew.-%, bevorzugt kleiner als 0,1 Gew.-% und besonders bevorzugt kleiner als 0,01 Gew.-% ist.

6. Werkstoffdraht nach einem der vorhergehenden Ansprüche,
**dadurch gekennzeichnet,**
daß die Füllung (42) aus einem agglomerierten Verbundpulver aus feinen Silizium-Partikeln und feinen metallischen Partikeln mindestens einer Aluminium-Silizium-Legierung besteht, die miteinander anhand von anorganischen und/oder organischen Bindern gebunden sind.

7. Werkstoffdraht nach Anspruch 6,
**dadurch gekennzeichnet,**
daß der Anteil an Silizium-Partikeln 5 bis 95 Gew.-% und der Anteil an Legierungspartikeln 95 bis 50 Gew.-% beträgt.

8. Werkstoffdraht nach Anspruch 6 oder 7,
**dadurch gekennzeichnet,**
daß die Silizium-Partikel eine mittlere Korngröße von 0,1 bis 10µm, vorzugsweise etwa 5µm aufweisen und/oder die Legierungspartikel eine mittlere Korngröße von 0,1 bis 50µm, vorzugsweise etwa 5µm aufweisen.

9. Werkstoffdraht nach einem der Ansprüche 6 bis 8,
**dadurch gekennzeichnet,**
daß die Legierungspartikel aus einer Mischung aus untereutektischen Legierungspartikeln und übereutektischen Legierungspartikeln bestehen.

10. Verwendung eines Werkstoffdrahtes nach einem der vorhergehenden Ansprüche für Drahtlichtbogenspritz- und/oder Hochgeschwindigkeits-Flammspritzverfahren.

11. Verwendung eines Werkstoffdrahtes nach einem der vorhergehenden Ansprüche für die Beschichtung von Zylinderlaufflächen in Zylinderbohrungen von Verbrennungskraftmaschinen.
